# EUROPEAN PATENT SPECIFICATION

(11) **EP 2 628 693 B1**
(45) Date of publication and mention of the grant of the patent: **05.11.2014**
(21) Application number: 12178775.8
(22) Date of filing: 01.08.2012
(51) Int. Cl.: B65D 83/30, B65D 83/20, B05B 1/16, B05B 11/00, B05B 15/06, F16N 3/12

(54) **Adaptor for spray cans**
Adapter für Sprühdosen
Adaptateur pour atomiseurs

(30) Priority: 15.02.2012 IT MI20120212
(43) Date of publication of application: 21.08.2013
(73) Proprietor: Silver S.N.C., 20139 Milano (IT)
(72) Inventor: Ravazzoni, Flavio, I-20139 Milano (IT); Porcelli, Michele, I-20139 Milano (IT)
(74) Representative: Long, Giorgio

(56) References cited:
- DE-A1-102005 037 068
- JP-A- 10 014 949
- US-A- 5 385 303

## Description

The present invention relates to an adaptor for spray cans.

Precision instruments and in particular those used for medical applications need continuous and careful maintenance. Of these, dental instruments such as, merely by way of example, turbines and contra-angles, require lubrication of all the moving parts at least daily and in any case, always before sterilisation. Such instruments are generally provided with a special aperture which the nozzle of a spray can of appropriate lubricant can be inserted in.

Bearing in mind that the lubrication aperture of such instruments differs in size depending on the type and brand of the instrument, various adaptors for the dispenser nozzle of the lubricant spray must be provided so as to permit its sealed insertion in such lubrication aperture.

In the current state of things, it is common practice to use just one can of liquid spray to which the relative adaptor is attached each time or to use a number of cans, each of which is coupled to a different adaptor. Both approaches have disadvantages.

First of all, given that the adaptors are a relatively small size it is not infrequent for them to be relatively small size it is not infrequent for them to be accidentally mislaid.

They are also subject to precocious wear, inasmuch as generally made from non durable material. For the same reason, the repeated daily manoeuvres of attachment/detachment to/from the same spray can, may cause them to break.

Lastly, in the case of using multiple spray cans, the problem arises of the increased costs of purchasing several cans, one for each adaptor. DE 10 2005 037068 A1 and US 5,385,303 A disclose an adaptor for spray cans according to the preamble of claim 1.

JP 10 014949 A discloses a dispensing device for a container of a washing liquid containing a foaming component that requires turning upside-down the container to dispense the liquid.

The problem which the present invention sets out to resolve is that of making a system available which overcomes the drawbacks spoken of above.

Such problem is resolved by an adaptor as defined in the appended claims, the definitions of which are an integral part of the present invention.

One object of the invention is therefore an adaptor for spray cans which has a plurality of dispenser nozzles, each suitable for application to various mechanical instruments.

Further characteristics and advantages of the present invention will be more clearly comprehensible from the description below of a preferred embodiment, made by way of a non-limiting example, with reference to the following figures wherein:
Figure 1 shows an exploded axonometric view of the adaptor according to the invention;
Figure 2 shows a side view of a detail of the adaptor in figure 1;
Figure 3 shows a view from above of a different detail of the adaptor in figure 1;
Figures 4 and 5 respectively show a rear and side view of a different detail of the adaptor in figure 1;
Figure 6 shows a side view of a different detail of the adaptor in figure 1;
Figure 7 shows a view from below of the detail in figure 3;
Figure 8 shows a view of a spray can with the adaptor according to the invention, to which various types of nozzle have been attached,
Figure 9 shows an exploded side view of some details of the adaptor according to the invention, according to a different embodiment;
Figure 10 shows a perspective view from below of a detail in figure 9;
Figure 11 shows a perspective view of the details in figure 9;
Figure 12 shows a side view of the detail in figure 5 according to a different embodiment.

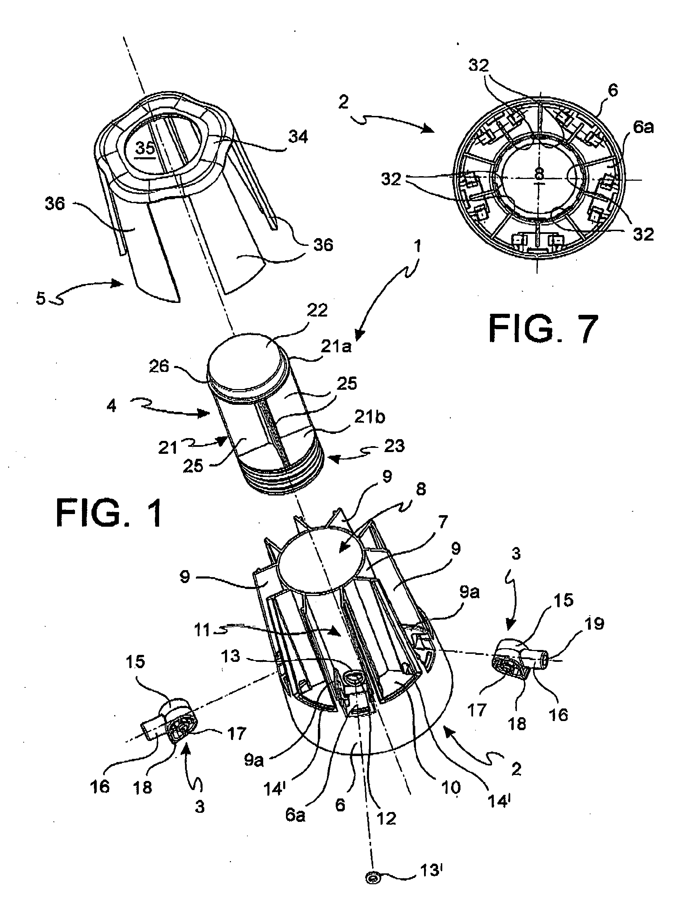

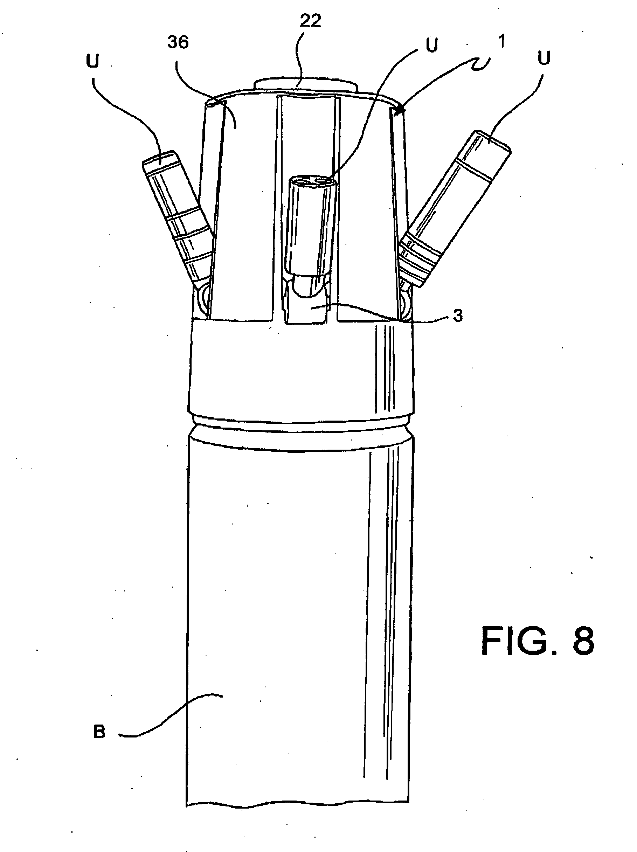

With reference to figures 1-7, the adaptor according to the invention, globally denoted by reference numeral 1, comprises a body 2 to which a plurality of nozzle-holders 3 may be joined, an actuator 4 for operating the dispenser of a spray can (indicted by B in figure 8) and a closure cap 5.

The body 2 can be inscribed in a cylinder or in a truncated cone and is hollow so as to form a cylindrical channel 8 which runs longitudinally all along the body 2.

The body 2 comprises a base portion 6 and an upper cylindrical portion 7 having a diameter less than that of the base portion 6 so as to form a shoulder 6a with it. A plurality of parallel pairs of fins spread out in a fan shape from the cylindrical portion 7. The fins 9 extend in height all along the cylindrical portion 7 and in depth as far as connecting to the rim of the base 6, so as to define one or more sectors 11, each positioned between a pair of parallel fins 9, alternated with two or more V-shaped sectors 10.

The sectors 11 positioned between the pairs of parallel fins 9 each form a seat for housing a nozzle-holder 3. To such purpose, the lower portion of each sector 11 comprises, along the fins 9, two hook elements 9a. It also has, along the rim of the shoulder 6a, a notch 14, the function of which will be clear from the rest of the description.

The lower portion of each sector 11 further comprises, on the surface of the cylindrical portion 7 of the body 2, a hole 12 which places the outside in communication with the cylindrical channel 8 inside the body 2. Around the hole 12 an annular seat 13 is placed for a gasket 13', generally an O-ring in elastomeric material.

At the rim of each V-shape sector 10, the surface of the shoulder 6a, comprises a notch 14', the function of which will be clear from the rest of the description.

The base portion of the body 2 further comprises, along the lower rim of the cylindrical channel 8, coupling means 32 to the neck of a spray can B.

In the embodiment shown in the figures, such coupling means 32 are composed of a plurality of teeth suitable for snap-catching to the rim of the neck of a can. In different embodiments, however, these may consist of a magnetic ring suitable for magnetically coupling to said rim of the can, generally made in ferrous material.

The nozzle-holder 3 comprises a coupling portion 15 to the hook elements 9a joined to the parallel fins 9 and a connector portion 16.

The coupling portion 15 is a substantially cylindrical shape and comprises, at the two sides, two pins 17 destined to couple to the hook elements 9a.

The coupling portion 15 further comprises a tooth 18, which extends from the cylindrical surface of the coupling portion 15, such tooth 18 being destined to facilitate the lowering of the nozzle-holder 3 from the closed to the operating position - constituting a gripping surface for the finger of a user - and to sustain and stop the nozzle-holder 3 at 90° from the vertical when in the operating position.

The connector portion 16 is a substantially cylindrical shape and extends starting from the cylindrical surface of the coupling portion 15, in an adjacent position to the tooth 18.

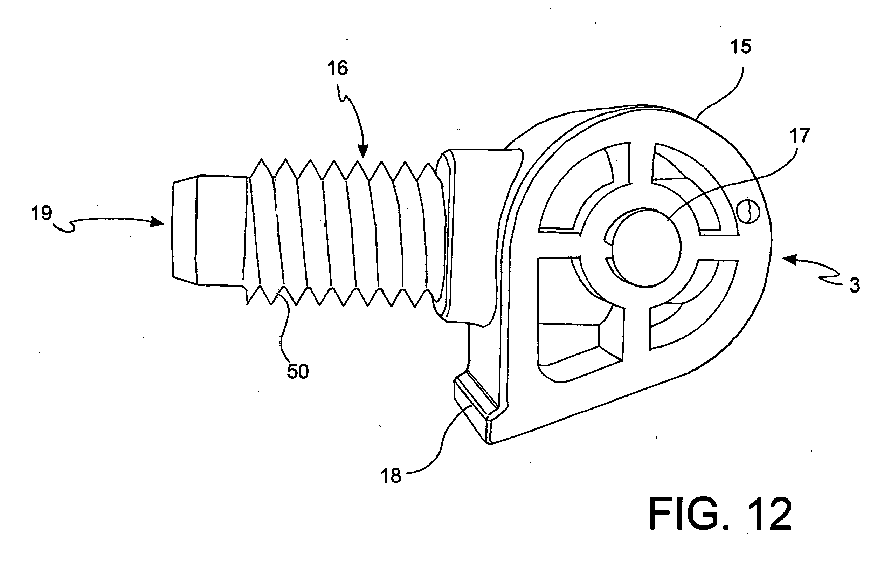

In one embodiment, shown in figure 12, the connector portion 16 comprises a threading 50 for a stable coupling with a nozzle U, in turn fitted with a complementary threading on its inner surface.

The nozzle-holder 3 is hollow and comprises internally a channel which connects the aperture 19 of the connector portion 16 to a hole 20 positioned on the coupling portion in alignment with said aperture 19.

When the nozzle-holder 3 is fitted inside a respective seat between two parallel fins 9, in a condition in which the pins 17 couple to the coupling elements 9a and the tooth 18 rests on the shoulder 6a, the hole 20 of the nozzle-holder - and therefore also the respective inner channel communicating with the aperture 19 facing outwards- aligns with the hole 12 present on the cylindrical portion 7 of the body 2 so as to seal it. This way the cylindrical channel 8 of the body 2 is in flow communication with the outside and the adaptor 1 according to the invention is placed in an operating condition.

Vice versa, if the nozzle-holder 3 is made to rotate so that the connector portion 16 is facing upwards, the hole 12 of the body 2 and the hole 20 of the nozzle-holder become misaligned, interrupting the flow communication between the inside and the outside of the body 2. In this rest condition, the gasket 13' ensures a seal against the cylindrical surface of the coupling portion 15 of the nozzle-holder 3 at all times, while the connector portion 16 is enclosed between the fins 9, minimising obstruction. In this condition, the notch 14 acts as a drainage channel and ensures the outflow of the residual lubricant oil inside the nozzle-holder 3 and in the nozzle U (lubricant oil which remains inside the nozzle-holder after dispensing) downwards. Preferably, the lower side of the base portion 6, that is the side opposite the shoulder 6a, can house a ring of absorbent material (not shown), such as a ring of foam rubber, felt or other material, having the function of absorbing the lubricant oil dripping from the nozzle-holder 3 after each use.

This way a single nozzle-holder 3 or more than one can be set in an operating condition, leaving the others in the rest position.

The actuator 4 has an outer diameter such as to be inserted so as to slide inside the cylindrical channel 8 of the body 2.

The actuator 4 comprises a central portion 21, which in turn comprises a button portion 22 at one end and a distal portion 23 at the opposite end.

The central portion 21 is substantially inscribable in a cylinder and comprises two end discs 21a, 21b connected by a central stem 24 and by ribs 25 (four in the drawing) which extend from the stem 24 as far as the perimeter of the two end discs 21a, 21b. This structure makes it possible to lighten the central portion 21, saving material, without however jeopardising the rigidity of the structure.

The button portion 22, also a substantially cylindrical shape, has a smaller diameter than that of the end disc 21a it is joined to, so as to form a recessed rim 26.

The distal portion 23 extends from the lower terminal disc 21b with a slightly smaller diameter than that of the disc 21b and ends in a beak 27.

The distal portion 23 comprises a duct 28 which ends underneath in the beak 27 with an engagement aperture 29 with the nozzle of the can B. The duct 28 ends at the opposite end with an orifice 30 positioned on the cylindrical surface of the distal portion 23.

On the cylindrical surface of the distal portion 23 two gaskets 31', 31" a r e also positioned, longitudinally distanced so as to enclose between them the orifice 30 and such as to interfere with the surface of the cylindrical channel 8 so as to seal it. An annular channel 33 is thereby formed between the two gaskets 31', 31". The gaskets 31', 31" may typically be O-rings in elastomeric material.

The orifice 30 is positioned at a distance from the aperture 29 such that, when the actuator 4 is inserted in the cylindrical channel 8 of the body 2 and is pressed to operate the spray can, the annular channel 33 will be level with the apertures 12 of the various sectors 11.

A spring 40, preferably a helical spring, which presses on one side on the lower surface of the distal portion 23 and on the other on the upper surface of the inner rim 166 of the body 2 is positioned around the beak 27.

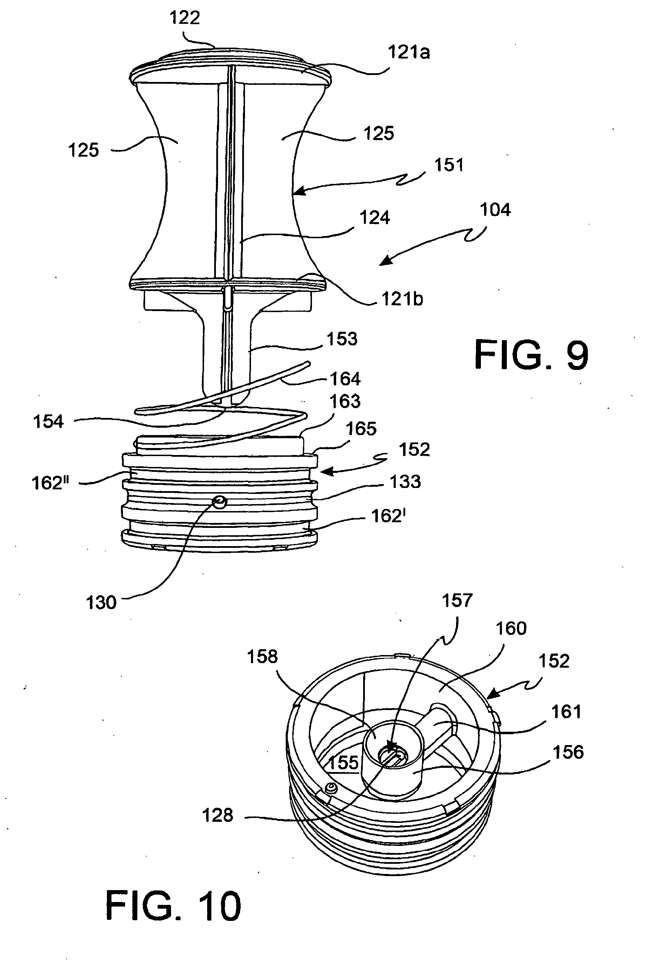

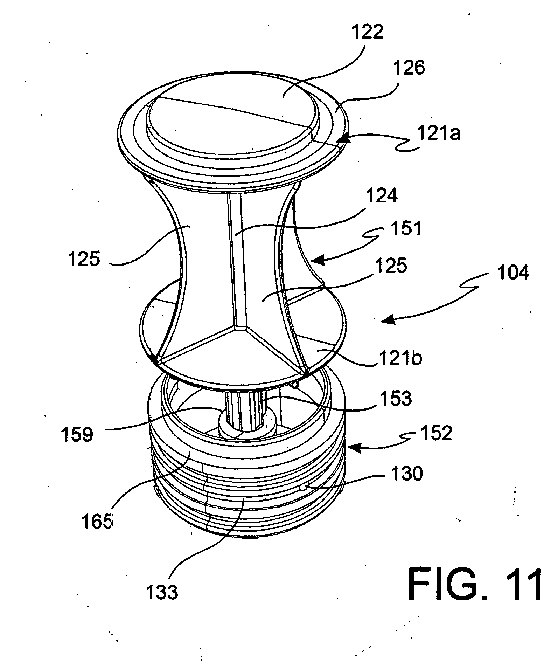

According to the embodiment shown in figures 9, 10 and 11, the actuator 104 comprises two separate parts, that is a mobile pusher 151 and a fixed dispenser connector 152. Both have an outer diameter such as to be inserted so as to slide inside the cylindrical channel 8 of the body 2.

The pusher 151 is substantially inscribable in a cylinder and comprises two end discs 121a, 121b connected by a central stem 124 and by ribs 125 (four in the drawing) which extend from the stem 124 as far as the perimeter of the two end discs 121a, 121b.

A button portion 122 is positioned above the upper end disc 121a. The button portion 122, also a substantially cylindrical shape, has a smaller diameter than that of the end disc 121a it is joined to, so as to form a recessed rim 126.

The central stem 124 extends, under the lower end disc 121b, to form a thrust finger 153, the lower end 154 of which is a convex shape.

The dispenser connector 152 is slightly smaller in diameter than the end disc 121b and is a cylindrical shape with an inner cavity 155, open at both ends.

A connector element 156 destined to engage with the nozzle of the can B is positioned in a central position inside the cavity 155. To such purpose, the connector element 156 comprises an aperture 157 on the side facing downwards, which the nozzle of the can B is inserted in. The aperture 157 is surrounded by a flared rim 158.

On the opposite side, facing upwards, the connector element 156 has a closed surface 159. The pusher 151 presses on such closed surface 159. To such purpose, the surface 159 is preferably concave, so as to achieve a shaped coupling with the convex surface of the lower end 154 of the pusher 151.

In other embodiments it will however be possible to configure both the lower end 154 of the pusher 151 and the closed surface 159 of the connector element 156 differently, for example envisaging flat surfaces.

The connector element 156 is connected to the inner cylindrical surface 160 of the dispenser connector 152 by means of a peduncle 161.

Inside the peduncle 161 a duct 128 which originates from the aperture 157 of the connector element 156 and ends at the opposite end with an orifice 130 positioned on the outer cylindrical surface of the dispenser connector 152 is housed.

Annular grooves 162', 162" are also positioned on the cylindrical outer surface of the dispenser connector 152, the grooves being destined to house two gaskets (not shown), longitudinally distanced so as to enclose between them the orifice 130 and such as to interfere with the surface of the cylindrical channel 8 so as to seal it. The gaskets may typically be O-rings in elastomeric material. The orifice 130 is in turn positioned on the bottom of an annular groove 133.

The annular groove 133 which houses the orifice 130 is positioned level with the apertures 12 of the various sectors 11, so that, when the device is actuated, the lubricant liquid vaporised by the can B passes through the duct 128 and to the orifice 130 and can be dispensed through the selected nozzle-holder 3.

The upper rim 163 of the dispenser connector 152 is configured in such a way as to act as an abutment surface for the pusher 151, thereby limiting its downward stroke. Excessive pressure could in fact damage or break the peduncle 161.

The dispenser connector 152 or at least the peduncle 161 is made in a sufficiently flexible material as to permit the flexion of the peduncle when the pressure of a finger is applied to the button portion 122 of the pusher 151. For example, the dispenser connector 152 may be made in a plastic material such as polypropylene.

Elastic means 164, typically a spiral spring, are positioned between the pusher 151 and the dispenser connector 152 to permit the upward return of the pusher 151. The elastic means 164 press on a shoulder 165 positioned at the bottom of the upper rim 163 of the dispenser connector 152 and on the lower surface of the pusher 151.

The closure cap 5 comprises an upper portion 34, from the perimeter of which a plurality of tabs 36 extend downwards. Each tab 36 terminates at the bottom with a tooth 37 of a size and shape as to be inserted in a notch 14' present in each of the V-shaped sectors 10 of the body 2. The space separating one tab 36 from that adjacent to it corresponds rather to the extension in width of a sector 11 of the body 2.

The upper portion 34 of the closure cap 5 has a central hole 35 of such diameter as to permit the introduction of the button portion 22, 122 of the actuator 4 and such as to constitute a stop for the recessed rim 26, 126.

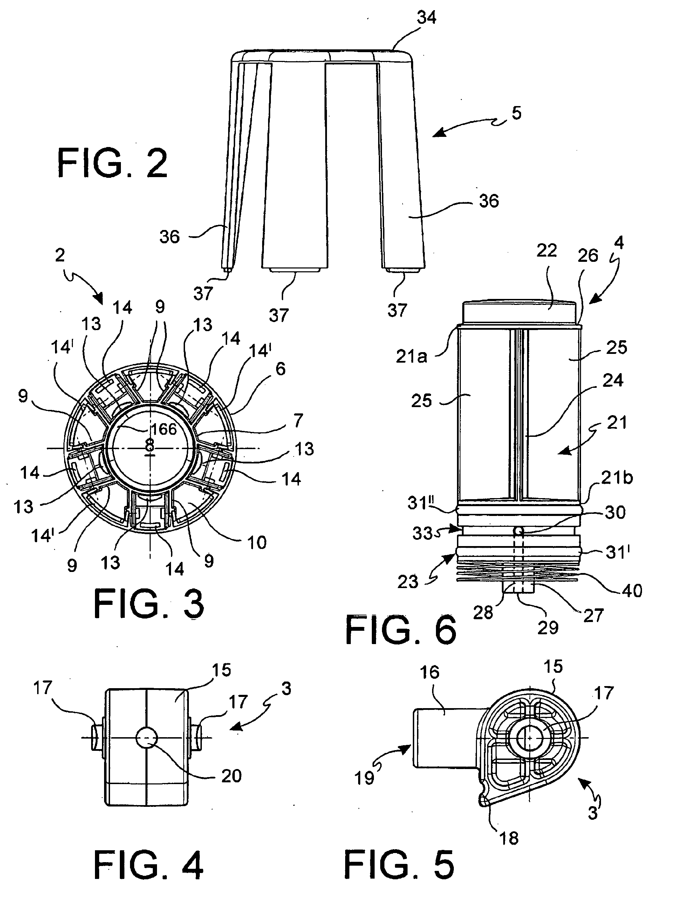

The adaptor 1 according to the invention is assembled by introducing the actuator 4 inside the cylindrical channel 8 of the body 2 and positioning above it the closure cap 5 until the teeth 37 snap into the respective notches 14'. In the embodiment in figures 9-11, the actuator 4 is in turn assembled by first introducing the dispenser connector 152 in the cylindrical channel 8 until it abuts with the inner rim 166 (see figure 3) of the body 2; the elastic means 164 are then positioned and lastly the pusher 151 is introduced.

The cap 5 may be attached to the body 2 by chemical (glues) or mechanical means (such as ultrasound soldering for example). This way, the closure cap 5 presses upwards against the recessed rim 26, 126 of the actuator 4, preventing it from being extracted from above. Before or after such operation, the nozzle-holder 3 can be fitted in the respective seats of the sector 11 as described above.

The adaptor 1 functions as follows:

The adaptor 1 is fitted onto a can B (Figure 8) in such a way that the coupling means 32 block it to the neck of the can. In this position the beak 27 or, in the embodiment shown in figures 9-11, the connector element 156 of the actuator 4 will be joined to the dispenser nozzle of the can (not shown) without however exerting a dispensing pressure on it. To achieve dispensing of the spray, the button portion 22, 122 of the actuator 4 must be pressed. The return of the actuator 4 to the rest position is ensured by the same dispenser nozzle of the can and by the spring 40 or by the elastic means 164.

To achieve the dispensing of the spray from one of the nozzle-holders, the nozzle-holder 3 must however be placed in the operating condition, that is to say in a position in which the connector portion 16 is horizontal and the hole 20 of the coupling portion 15 is aligned with the hole 12 of the body 2. In this condition, when the actuator 4 is pressed to dispense the spray, the fluid passes through the duct 28, 128 and the orifice 30, 130 until it reaches the annular channel 33,133, from which it passes into the nozzle-holder 3 which is positioned in an operative condition. The gaskets 31', 31" or, in the embodiment in figures 9-11, the gaskets housed in the annular grooves 162', 162", prevent the exit of the fluid from the annular channel 33, 133 while the gaskets 13 of the other non-selected holes 12 prevent the exit of fluid outwards.

As shown in figure 8, on each nozzle-holder 3 a nozzle U may be fitted suitable for the various devices to be serviced.

In one embodiment, the various nozzles U may be different colours, so as to facilitate the selection of the nozzle U suitable for the specific instrument to be lubricated.

The advantages of the invention are evident.

With a single adaptor positioned on a single spray can it is in fact possible to select the various types of nozzle for dispensing the fluid, typically a lubricant, in different models and brands of instrument. Such nozzles may be pre-fitted to respective nozzle-holders 3, thereby saving time and cost to the user. The latter in fact will not need to have a number of cans available, each with a different nozzle, or instead have to attach and detach different nozzles to the same can as required.

The adaptor according to the invention may be made in plastic with a consequent low production cost.

The need to detach the adaptor only when the can is empty also reduces the risk of accidental breakage of the device.

In the embodiment shown in figures 9-11, the fact that the dispenser connector 152 is fixed and only the pusher 151 is mobile considerably reduces the pressure to apply to the button portion 122 to dispense the lubricant. In fact, the gaskets present on the outer surface of the dispenser connector 152 would make it difficult for it to slide.

The description refers to only one particular embodiment of the present invention, to which a person skilled in the art may make all the necessary modifications for its adaptation to particular conditions while remaining within the sphere of protection claimed.

Although the adaptor according to the invention has been designed in particular for use in lubricating dental instruments, it is clear that it may also be applied to all those mechanical instruments which require this type of maintenance, as indeed to any other use in which the introduction of a vaporised fluid from a spray can by means of a predefined connector is required.

## Claims

1. Adaptor (1) for spray cans (B),comprising a body (2) which can be positioned on the neck of a can (B), and an actuator (4, 104) for operating the dispenser nozzle of the spray can (B), wherein the body (2) comprises a base portion (6), an upper cylindrical portion (7) and a cylindrical channel (8), said actuator (4, 104) being insertable so as to slide in the cylindrical channel (8), the adaptor (1) comprising a plurality of nozzle-holders (3), each of which is suitable for being joined to a nozzle (U) for dispensing to a mechanical instrument, **characterized by** the fact that each of the nozzle-holders (3) comprises a coupling portion (15) to the body (2) and a connector portion (16) to a nozzle (U), also comprising a channel which connects an aperture (19) of the connector portion (16) to a hole (20) positioned on the coupling portion (15) in alignment with said aperture (19), wherein, when the nozzle-holder (3) is in the operative condition, the hole (20) of the nozzle-holder (3) aligns with a hole (12) on the cylindrical portion (7) of the body (2) so as to seal it; vice versa, when the nozzle-holder (3) is in the rest condition, the hole (12) of the body (2) and the hole (20) of the nozzle-holder (3) are misaligned and a gasket (13') ensures a seal against the cylindrical surface of the coupling portion (15) of the nozzle-holder (3).

2. Adaptor (1) according to claim 1, wherein the upper cylindrical portion (7) has a diameter less than that of the base portion (6) so as to form a shoulder (6a) with it, wherein a plurality of parallel pairs of fins (9) spread out in a fan shape from the cylindrical portion (7) defining between them two or more sectors (11), each of said sectors (11) forming a seat for housing a nozzle-holder (3).

3. Adaptor (1) according to claim 2, wherein the lower portion of each sector (11) comprises, along the fins (9), two hook elements (9a) and presents a notch (14) along the rim of the shoulder (6a), the sector (11) further comprising, on the surface of the cylindrical portion (7) of the body (2), the said hole (12) which places it in communication with the cylindrical channel (8) inside the body (2), the said gasket (13') being placed around the hole (12).

4. Adaptor (1) according to any of the claims from 1 to 3, wherein the base portion (6) of the body (2) comprises, along the lower rim of the cylindrical channel (8), coupling means (32) to the neck of the can (B).

5. Adaptor (1) according to claim 4, wherein said coupling means (32) are magnetic.

6. Adaptor (1) according to any of the claims from 1 to 5, wherein the coupling portion (15) is a substantially cylindrical shape and comprises, at the two sides, two pins (17) destined to couple to the hook elements (9a) of the body (2), the coupling portion (15) further comprising a tooth (18) destined to facilitate the lowering of the nozzle-holder (3) from the closed to the operating position and to sustain and stop the nozzle-holder (3) at 90° from the vertical when it is in the operating position resting on the surface of the shoulder (6a) of the corresponding sector (11); and wherein the connector portion (16) extends starting from the cylindrical surface of the coupling portion (15), in an adjacent position to the tooth (18).

7. Adaptor (1) according to any of the claims from 1 to 6, wherein the actuator (4) comprises a central portion (21), which in turn comprises a button portion (22) at one end and at the opposite end a distal portion (23), said distal portion (23) ending with a beak (27) and comprising a duct (28) which ends underneath in the beak (27) with an engagement aperture (29) with the dispensing nozzle of the can (B) and at the opposite end with an orifice (30) positioned on the cylindrical surface of the distal portion (23).

8. Adaptor (1) according to claim 7, two gaskets (31', 31") being positioned on the cylindrical surface of the distal portion (23), the said gaskets (31', 31") enclosing therebetween the orifice (30) and such as to interfere with the surface of the cylindrical channel (8) so as to seal it, an annular channel (33) being formed between the two gaskets (31', 31").

9. Adaptor (1) according to claim 7 or 8, wherein the central portion (21) comprises two end discs (21a, 21b) connected by a central stem (24) and by ribs (25) which extend from the stem (24) as far as the perimeter of the two end discs (21a, 21b).

10. Adaptor (1) according to any of the claims from 1 to 6, wherein the actuator (104) comprises a movable pusher (151) and a fixed dispenser connector (152).

11. Adaptor (1) according to claim 10, wherein the pusher (151) comprises two end discs (121a, 121b) connected by a central stem (124) and by ribs (125) which extend starting from the stem (124), wherein the central stem (124) extends, under the lower end disc (121b), to form a thrust finger (153).

12. Adaptor (1) according to claim 10 or 11, wherein the dispenser connector (152) is a cylindrical shape and has an inner cavity (155), open at both ends, a connector element (156) destined to engage with the nozzle of a can (B) being positioned in a central position inside the cavity (155).

13. Adaptor (1) according to claim 12, wherein the connector element (156) comprises an aperture (157) on the side facing downwards, which the nozzle of the can (B) can be inserted in, and a closed surface (159) positioned on the opposite side, facing upwards, said surface (159) being destined to interfere with the pusher (151).

14. Adaptor (1) according to claim 13, wherein the connector element (156) is connected to the inner cylindrical surface (160) of the dispenser connector (152) by means of a peduncle (161), said peduncle (161) being sufficiently flexible as to permit its flexion when the pressure of a finger is applied to the pusher (151), inside the peduncle (161) a duct (128) which originates from the aperture (157) of the connector element (156) and ends at the opposite end with an orifice (130) positioned on the outer cylindrical surface of the dispenser connector (152), being housed.

15. Adaptor (1) according to any of the claims from 10 to 14, wherein annular grooves (162', 162") destined to house two gaskets are positioned on the cylindrical outer surface of the dispenser connector (152), said annular grooves (162', 162") being longitudinally spaced apart so as to enclose the orifice (130) therebetween.

16. Adaptor (1) according to any of the claims from 10 to 15, wherein, between the pusher (151) and the dispenser connector (152) elastic means (164) are positioned, such as a spiral spring.

17. Adaptor (1) according to any of the claims from 6 to 16, wherein the connection portion (16) of the nozzle-holder (3) comprises a threading (50) for a stable coupling with a nozzle (U), wherein said nozzle (U) is in turn fitted with a complementary threading on its inner surface.

## Patentansprüche

1. Adapter (1) für Sprühdosen (B), umfassend einen Körper (2), welcher an dem Hals einer Dose (B) positioniert werden kann, und einen Aktuator (4, 104) zum Bedienen der Ausgabedüse der Sprühdose (B), wobei der Körper (2) einen Basisabschnitt (6), einen oberen zylindrischen Abschnitt (7) und einen zylindrischen Kanal (8) umfasst, wobei der Aktuator (4, 104) einführbar ist, um in den zylindrischen Kanal (8) zu gleiten, wobei der Adapter (1) eine Mehrzahl von Düsen-Haltern (3) umfasst, von welchen jeder dazu geeignet ist, mit einer Düse (U) zum Ausgeben an ein mechanisches Instrument verbunden zu werden, **dadurch gekennzeichnet, dass** jeder der Düsen-Halter (3) einen Kopplungsabschnitt (15) an den Körper (2) und einen Verbindungsabschnitt (16) an eine Düse (U) umfasst, ebenfalls umfassend einen Kanal, welcher eine Öffnung (19) des Verbindungsabschnitts (16) mit einem an dem Kopplungsabschnitt (15) in Ausrichtung mit der Öffnung (19) positioniertes Loch (20) umfasst, wobei, wenn der Düsen-Halter (3) in dem Betriebszustand ist, das Loch (20) des Düsen-Halters (3) mit einem Loch (12) an dem zylindrischen Abschnitt (7) des Körpers (2) ausgerichtet ist, um es zu versiegeln, wobei umgekehrt, wenn der Düsen-Halter (3) in der Ruheposition ist, das Loch (12) des Körpers (2) und das Loch (20) des Düsen-Halters (3) versetzt sind, und eine Dichtung (13') ein Abdichten gegen die zylindrische Fläche des Kopplungsabschnitts (15) des Düsen-Halters (3) sicherstellt.

2. Adapter (1) nach Anspruch 1, wobei der obere zylindrische Abschnitt (7) einen Durchmesser aufweist, welcher kleiner ist als derjenige des Basisabschnitts (6), um eine Schulter (6a) damit zu bilden, wobei eine Mehrzahl von parallelen Paaren von Graten (9) sich fächerförmig von dem zylindrischen Abschnitt (7) erstrecken, wobei zwischen ihnen zwei oder mehrere Sektoren (11) definiert sind, wobei jeder der Sektoren (11) einen Sitz zum Aufnehmen eines Düsen-Halters (3) bildet.

3. Adapter (1) nach Anspruch 2, wobei der untere Abschnitt von jedem Sektor (11) entlang der Grate (9) zwei Hakenelemente (9a) umfasst und eine Nut (14) entlang dem Rand der Schulter (6a) darstellt, wobei der Sektor (11) ferner an der Fläche des zylindrischen Abschnitts (7) des Körpers (2) das Loch (12) umfasst, wodurch es in Verbindung mit dem zylindrischen Kanal (8) innerhalb des Körpers (2) gebracht ist, wobei die Dichtung (13') um das Loch (12) herum platziert ist.

4. Adapter (1) nach einem der Ansprüche 1 bis 3, wobei der Basisabschnitt (6) des Körpers (2) entlang des unteren Rings des zylindrischen Kanals (8) Kopplungsmittel (32) an den Hals der Dose (B) umfasst.

5. Adapter (1) nach Anspruch 4, wobei die Kopplungsmittel (32) magnetisch sind.

6. Adapter (1) nach einem der Ansprüche 1 bis 5, wobei der Kopplungsabschnitt (15) von einer im Wesentlichen zylindrischen Form ist und an den beiden Seiten zwei Stifte (17) umfasst, welche dazu vorgesehen sind, mit den Hakenelementen (9a) des Körpers (2) zu koppeln, wobei der Kopplungsabschnitt (15) ferner einen Zahn (18) umfasst, welcher dazu vorgesehen ist, das Absenken des Düsen-Halters (3) von der geschlossenen in die Betriebsposition zu erleichtern und den Düsen-Halter (3) bei 90° aus der Vertikalen zu halten und zu stoppen, wenn er sich in der Betriebsposition auf der Fläche der Schulter (6a) des entsprechenden Sektors (11) ruhend befindet; und wobei der Verbindungsabschnitt (16) sich beginnend von der zylindrischen Fläche des Kopplungsabschnitts (15) in einer benachbarten Position zu dem Zahn (18) erstreckt.

7. Adapter (1) nach einem der Ansprüche 1 bis 6, wobei der Aktuator (4) einen zentralen Abschnitt (21) umfasst, welcher wiederum einen Knopfabschnitt (22) an einem Ende und an dem gegenüberliegenden Ende einen distalen Abschnitt (23) umfasst, wobei der distale Abschnitt (23) mit einer Tülle (27) endet und eine Leitung (28) umfasst, welche unterhalb in der Tülle (27) endet, wobei eine Eingriffsöffnung (29) mit der Ausgabedüse der Dose (B) und an dem gegenüberliegenden Ende mit einer Mündung (30) an der zylindrischen Fläche des distalen Abschnitts (23) positioniert ist.

8. Adapter (1) nach Anspruch 7, wobei zwei Dichtungen (31', 31") an der zylindrischen Fläche des distalen Abschnitts (23) positioniert sind, wobei die Dichtungen (31', 31") zwischen einander die Mündung (30) einschließen und zwar derart, dass sie mit der Fläche des zylindrischen Kanals (8) derart wechselwirken, dass sie ihn versiegeln, wobei ein ringförmiger Kanal (33) zwischen den beiden Dichtungen (31', 31") gebildet ist.

9. Adapter (1) nach Anspruch 7 oder 8, wobei der zentrale Abschnitt (21) zwei Endscheiben (21 a, 21 b) umfasst, die durch einen zentralen Schaft (24) und durch Rippen (25) verbunden sind, die sich von dem Schaft (24) bis zu dem Umfang der beiden Endscheiben (21 a, 21 b) erstrecken.

10. Adapter (1) nach einem der Ansprüche 1 bis 6, wobei der Aktuator (104) einen bewegbaren Stößel (151) und ein festgelegtes Ausgabe-Verbindungselement (152) umfasst.

11. Adapter (1) nach Anspruch 10, wobei der Stößel (151) zwei Endscheiben (121 a, 121b) umfasst, welche durch einen zentralen Schaft (124) und durch Rippen (125), welche sich beginnend von dem Schaft (124) erstrecken, verbunden sind, wobei sich der zentrale Schaft (124) unter der unteren Endscheibe (121b) erstreckt, um einen Schubfinger (153) zu bilden.

12. Adapter (1) nach Anspruch 10 oder 11, wobei das Ausgabe-Verbindungselement (152) von einer zylindrischen Form ist und einen inneren Hohlraum (155), welcher an beiden Enden geöffnet ist, ein Verbindungselement (156), welches dazu vorgesehen ist, mit der Düse einer Dose (B) in eingriff zu treten, welche in einer zentralen Position innerhalb des Hohlraums (155) angeordnet ist, aufweist.

13. Adapter (1) nach Anspruch 12, wobei das Verbindungselement (156) eine Öffnung (157) an der nach unten weisenden Seite, in welche die Düse der Dose (B) eingeführt werden kann, und eine geschlossene Fläche (159) umfasst, welche an der gegenüberliegenden Seite nach oben weisend positioniert ist, wobei die Fläche (159) dazu vorgesehen ist, mit dem Stößel (151) zu wechselwirken.

14. Adapter (1) nach Anspruch 13, wobei das Verbindungselement (156) mit der inneren zylindrischen Fläche (160) des Ausgabe-Verbindungselements (152) mittels eines Stiels (161) verbunden ist, wobei der Stiel (161) ausreichend flexibel ist, um sein Biegen zu erlauben, wenn der Druck eines Fingers auf den Stößel (151) ausgeübt wird, wobei innerhalb des Stiels (161) eine Leitung (128), welche von der Öffnung (157) des Verbindungselements (156) her stammt und an dem gegenüberliegenden Ende mit einer Mündung (130) endet, welche an der äußeren zylindrischen Fläche des Ausgabe-Verbindungselements positioniert ist, aufgenommen ist.

15. Adapter (1) nach einem der Ansprüche 10 bis 14, wobei ringförmige Nuten (162', 162"), welche dazu vorgesehen sind, zwei Dichtungen aufzunehmen, an der zylindrischen äußeren Fläche des Ausgabe-Verbindungselements (152) positioniert sind, wobei die ringförmige Nuten (162', 162") longitudinal beabstandet sind, so dass sie zwischen einander die Mündung (130) einschließen.

16. Adapter (1) nach einem der Ansprüche 10 bis 15, wobei zwischen dem Stößel (151) und dem Ausgabe-Verbindungselement (152) elastische Mittel (164), wie beispielsweise eine Spiralfeder, positioniert sind.

17. Adapter (1) nach einem der Ansprüche 6 bis 16, wobei der Verbindungsabschnitt (16) des Düsen-Halters (3) ein Gewinde (50) für ein stabiles Koppeln mit einer Düse (U) umfasst, wobei die Düse (U) wiederum mit einem komplementären Gewinde an ihrer inneren Fläche ausgestattet ist.

## Revendications

1. Adaptateur (1) pour atomiseurs (B), comprenant un corps (2) qui peut être positionné sur le col d'une boîte (B), et un actionneur (4, 104) pour actionner la buse de distribution de l'atomiseur (B), dans lequel le corps (2) comprend une partie de base (6), une partie cylindrique supérieure (7) et un canal cylindrique (8), ledit actionneur (4, 104) pouvant être inséré afin de glisser dans le canal cylindrique (8), l'adaptateur (1) comprenant une pluralité de supports de buse (3), dont chacun est approprié pour être assemblé à une buse (U) pour la distribution à un instrument mécanique, **caractérisé en ce que** chacun des supports de buse (3) comprend une partie de couplage (15) au corps (2) et une partie de raccordement (16) à une buse (U), comprenant un canal qui raccorde une ouverture (19) de la partie de raccordement (16) à un trou (20) positionné sur la partie de couplage (15) en alignement avec ladite ouverture (19), dans lequel, lorsque le support de buse (3) est dans la condition opérationnelle, le trou (20) du support de buse (3) s'aligne avec un trou (12) sur la partie cylindrique (7) du corps (2) afin de réaliser son étanchéité ; vice versa, lorsque le support de buse (3) est dans la condition de repos, le trou (12) du corps (2) et le trou (20) du support de buse (3) présentent un défaut d'alignement et un joint (13') garantit un joint d'étanchéité contre la surface cylindrique de la partie de couplage (15) du support de buse (3).

2. Adaptateur (1) selon la revendication 1, dans lequel la partie cylindrique supérieure (7) a un diamètre inférieur à celui de la partie de base (6) afin de former un épaulement (6a) avec cette dernière, dans lequel une pluralité de paires parallèles d'ailettes (9) déployées dans une forme d'éventail à partir de la partie cylindrique (7) définissant entre elles deux ou plusieurs secteurs (11), chacun desdits secteurs (11) formant un siège pour loger un support de buse (3).

3. Adaptateur (1) selon la revendication 2, dans lequel la partie inférieure de chaque secteur (11) comprend, le long des ailettes (9), deux éléments de crochet (9a) et présente une encoche (14) le long du bord de l'épaulement (6a), le secteur (11) comprenant en outre, sur la surface de la partie cylindrique (7) du corps (2), ledit trou (12) qui le place en communication avec le canal cylindrique (8) à l'intérieur du corps (2), ledit joint (13') étant placé autour du trou (12).

4. Adaptateur (1) selon l'une quelconque des revendications 1 à 3, dans lequel la partie de base (6) du corps (2) comprend, le long du bord inférieur du canal cylindrique (8), des moyens de couplage (32) sur le col de la boîte (B).

5. Adaptateur (1) selon la revendication 4, dans lequel lesdits moyens de couplage (32) sont magnétiques.

6. Adaptateur (1) selon l'une quelconque des revendications 1 à 5, dans lequel la partie de couplage (15) est une forme sensiblement cylindrique et comprend, au niveau des deux côtés, deux broches (17) destinées à se coupler aux éléments de crochet (9a) du corps (2), la partie de couplage (15) comprenant en outre une dent (18) destinée à faciliter l'abaissement du support de buse (3) de la position fermée à la position opérationnelle et à soutenir et arrêter le support de buse (3) à 90° par rapport à la verticale, lorsqu'il est dans la position opérationnelle reposant sur la surface de l'épaulement (6a) du secteur (11) correspondant ; et dans lequel la partie de raccordement (16) s'étend à partir de la surface cylindrique de la partie de couplage (15), dans une position adjacente à la dent (18).

7. Adaptateur (1) selon l'une quelconque des revendications 1 à 6, dans lequel l'actionneur (4) comprend une partie centrale (21), qui comprend à son tour une partie de bouton (22) au niveau d'une extrémité et au niveau de l'extrémité opposée, une partie distale (23), ladite partie distale (23) se terminant par un bec (27) et comprenant un conduit (28) qui se termine au-dessous du bec (27) avec une ouverture de mise en prise (29) avec la buse de distribution de la boîte (B) et au niveau de l'extrémité opposée, par un orifice (30) positionné sur la surface cylindrique de la partie distale (23).

8. Adaptateur (1) selon la revendication 7, deux joints (31', 31") étant positionnés sur la surface cylindrique de la partie distale (23), lesdits joints (31', 31") enfermant entre eux, l'orifice (30) et afin d'interférer avec la surface du canal cylindrique (8) pour réaliser son étanchéité, un canal annulaire (33) étant formé entre les deux joints (31', 31").

9. Adaptateur (1) selon la revendication 7 ou 8, dans lequel la partie centrale (21) comprend deux disques d'extrémité (21a, 21b) raccordés par une tige centrale (24) et par des nervures (25) qui s'étendent à partir de la tige (24) jusqu'au périmètre des deux disques d'extrémité (21a, 21b).

10. Adaptateur (1) selon l'une quelconque des revendications 1 à 6, dans lequel l'actionneur (104) comprend un poussoir mobile (151) et un connecteur de distribution fixe (152).

11. Adaptateur (1) selon la revendication 10, dans lequel le poussoir (151) comprend deux disques d'extrémité (121a, 121b) raccordés par une tige centrale (124) et par des nervures (125) qui s'étendent à partir de la tige (124), dans lequel la tige centrale (124) s'étend, sous le disque d'extrémité inférieur (121b), afin de former un doigt de poussée (153).

12. Adaptateur (1) selon la revendication 10 ou 11, dans lequel le connecteur de distribution (152) a une forme cylindrique et a une cavité interne (155), ouverte aux deux extrémités, un élément de raccordement (156) destiné à se mettre en prise avec la buse d'une boîte (B) étant positionné dans une position centrale à l'intérieur de la cavité (155).

13. Adaptateur (1) selon la revendication 12, dans lequel l'élément de raccordement (156) comprend une ouverture (157) sur le côté orienté vers le bas, dans laquelle la buse de la boîte (B) peut être insérée, et une surface fermée (159) positionnée sur le côté opposé orienté vers le haut, ladite surface (159) étant destinée à interférer avec le poussoir (151).

14. Adaptateur (1) selon la revendication 13, dans lequel l'élément de raccordement (156) est raccordé à la surface cylindrique interne (160) du connecteur de distribution (152) au moyen d'un pédoncule (161), ledit pédoncule (161) étant suffisamment souple pour permettre sa flexion lorsque la pression d'un doigt est appliquée sur le poussoir (151), à l'intérieur du pédoncule (161), est logé un conduit (128) qui commence à l'ouverture (157) de l'élément de raccordement (156) et se termine au niveau de l'extrémité opposée avec un orifice (130) positionné sur la surface cylindrique externe du connecteur de distribution (152).

15. Adaptateur (1) selon l'une quelconque des revendications 10 à 14, dans lequel des rainures annulaires (162', 162") destinées à loger deux joints, sont positionnées sur la surface externe cylindrique du connecteur de distribution (152), lesdites rainures annulaires (162', 162") étant longitudinalement espacées afin d'enfermer l'orifice (130) entre elles.

16. Adaptateur (1) selon l'une quelconque des revendications 10 à 15, dans lequel, entre le poussoir (151) et le connecteur de distribution (152), on positionne des éléments élastiques (164), tel qu'un ressort en spirale.

17. Adaptateur (1) selon l'une quelconque des revendications 6 à 16, dans lequel la partie de raccordement (16) du support de buse (3) comprend un filetage (50) pour le couplage stable avec une buse (U) dans lequel ladite buse (U) est à son tour équipée avec un filetage complémentaire sur sa surface interne.
